# EUROPÄISCHE PATENTSCHRIFT

(11) **EP 3 552 996 B1**
(45) Veröffentlichungstag und Bekanntmachung des Hinweises auf die Patenterteilung: **09.09.2020**
(21) Anmeldenummer: 19168214.5
(22) Anmeldetag: 09.04.2019
(51) Int. Cl.: B65G 51/06, G01N 35/04

(54) **MAGAZINEINSATZ FÜR EINE ROHRPOSTBÜCHSE ZUR AUFNAHME VON PROBENRÖHRCHEN SOWIE ROHRPOSTBÜCHSE MIT EINEM SOLCHEN MAGAZINEINSATZ**
CARTRIDGE INSERT FOR A PNEUMATIC TUBE SOCKET FOR RECEIVING TUBE SAMPLES AND PNEUMATIC TUBE SOCKET COMPRISING SUCH AN INSERT
INSERT MAGASIN POUR UNE DOUILLE DU SYSTÈME DE MANUTENTION PNEUMATIQUE DESTINÉ À LA RÉCEPTION DE TUBES À ÉCHANTILLON ET DE DOUILLES DU SYSTÈME DE MANUTENTION PNEUMATIQUE DOTÉE D'UN TEL INSERT MAGASIN

(30) Priorität: 13.04.2018 DE 102018205639
(43) Veröffentlichungstag der Anmeldung: 16.10.2019
(73) Patentinhaber: Aerocom GmbH & Co. Communicationssysteme, 73529 Schwäbisch Gmünd (DE)
(72) Erfinder: Meiling, Johannes, 73525 Schwäbisch Gmünd (DE)
(74) Vertreter: Kohler Schmid Möbus Patentanwälte

(56) Entgegenhaltungen:
- EP-A1- 3 441 330
- EP-A2- 0 565 166
- EP-A2- 0 589 528
- WO-A1-2014/081283
- WO-A1-2018/085871

## Beschreibung

Die Erfindung betrifft einen Magazineinsatz für eine Rohrpostbüchse zur Aufnahme von Probenröhrchen sowie eine Rohrpostbüchse mit einem solchen Magazineinsatz. In der medizinischen Praxis werden Probenbehältnisse in Form von Probenröhrchen zur Entnahme, zum Transport sowie auch für die zumindest kurzfristige Lagerung von Körperflüssigkeiten wie beispielsweise Blut, Liquor cerebrospinalis, Pleuraflüssigkeit und dergleichen, eingesetzt.

Die Probenröhrchen werden in der Praxis häufig mittels einer Rohrpostanlage zu einem gebäudeintern oder auch extern gelegenen Bestimmungsort, beispielsweise einem diagnostischen Labor, transportiert. Dazu werden sogenannte Rohrpostbüchsen, die auch als Versand-Kartuschen bezeichnet werden, eingesetzt. Die Rohrpostbüchsen weisen in der Regel einen rohrförmigen Grundkörper auf, der beidenends mit einer verschließbaren Öffnung versehen ist. Über diese Öffnungen kann die Rohrpostbüchse mit dem jeweiligen Transportgut beladen und das Transportgut wieder aus der Rohrpostbüchse, zumeist automatisiert, entnommen werden. Die Rohrpostbüchsen sind üblicherweise beidenends mittels eines Schwenk- oder Klapp-Deckels verschließbar.

Im normalen Fahrbetrieb der Rohrpostanlage werden die Rohrpostbüchsen sowie die darin angeordneten Probenröhrchen mitunter enormen Kräften von bis zum lOfachen der Erdbeschleunigung (10g) ausgesetzt. Beim Transport von empfindlichem Probenmaterial, wie etwa Blut, kann es dadurch zu unerwünschten Veränderungen des Probenmaterials kommen. So kann etwa bei Blut eine Hämolyse der roten Blutkörperchen und damit einhergehend eine Verfälschung von Messergebnissen diagnostischer Parameter ausgelöst werden.

WO 2014/081283 A1 beschreit einen Magazineinsatz nach dem Oberbegriff des Anspruchs 1.

Es ist deshalb die Aufgabe der Erfindung, einen Magazineinsatz für eine Rohrpostbüchse sowie eine Rohrpostbüchse bereitzustellen, in dem Probenröhrchen während des Transports vor einem unkontrollierten Hin- und Herschleudern besser geschützt sind und die eine insgesamt einfache und zuverlässige Bedienung, insbesondere eine automatisierte Entleerung des Magazineinsatzes erlauben.

Die den Magazineinsatz betreffende Aufgabe wird durch einen Magazineinsatz mit den in Anspruch 1 angegeben Merkmalen gelöst. Die erfindungsgemäße Rohrpostbüchse weist die in Anspruch 13 angegebenen Merkmale auf. Bevorzugte Weiterbildungen der Erfindung sind Gegenstand der Unteransprüche.

Der erfindungsgemäße Magazineinsatz ist zur Montage in einer Rohrpostbüchse und für den Transport von mit Körperflüssigkeiten befüllten Probenröhrchen entlang einer Rohrpostanlage vorgesehen. Der Magazineinsatz umfasst eine in der Rohrpostbüchse (drehfest) anordenbare Magazintrommel mit mehreren Aufnahmekammern für die Probenröhrchen. Die Aufnahmekammern sind ringförmig um die Längsachse des Magazineinsatzes herum angeordnet und erstrecken sich jeweils in einer zur Längsachse des Magazineinsatzes axialen Richtung durch die Magazintrommel hindurch. Der Magazineinsatz weist eine Fixiereinheit auf, die um die Längsachse des Magazineinsatzes von einer Fixierposition in eine Freigabestellung schwenkbar ist, wobei ein in der jeweiligen Aufnahmekammer angeordnetes Probenröhrchen in der Aufnahmekammer alleinig bei in der Fixierposition angeordneter Fixiereinheit relativ zur Magazintrommel lagefixiert gehalten ist.

Zum Betätigen der Fixiereinheit dient erfindungsgemäß ein Schieber, der in einer zentralen Durchgangsausnehmung der Magazintrommel angeordnet ist. Der Schieber ist aus einer ersten Funktionsstellung bidirektional in eine jeweilige zweite Funktionsstellung relativ zur Magazintrommel in axialer Richtung verschiebbar. Zum Verkoppeln des Schiebers mit der Fixiereinheit dient ein Mitnehmer oder Mitnahmeelement, der/das am Schieber befestigt ist. Das Mitnahmeelement erstreckt sich dabei in radialer Richtung in eine Steuerkurve der Fixiereinheit hinein, sodass die Fixiereinheit durch ein Überführen des Schiebers in seine jeweilige zweite Funktionsstellung aus der Fixierposition in ihre Freigabestellung verschwenkbar ist.

Der Magazineinsatz ermöglicht ein zuverlässiges Fixieren der im Magazineinsatz angeordneten Probenröhrchen während deren Transport in einer Rohrpostbüchse entlang eines Leitungsrohrs einer Rohrpostanlage. Dadurch kann ein unerwünschtes Hin- und Herschleudern der Probenröhrchen innerhalb des Magazineinsatzes unterbunden werden. Insgesamt können dadurch Beeinträchtigungen von in den Probenröhrchen enthaltenen Flüssigkeiten und dergl. während ihres Rohrposttransports entgegengewirkt werden. Unerwünschten Analysefehlern bei diagnostischen Untersuchungen von in den Probenröhrchen transportierten Flüssigkeiten kann dadurch entgegengewirkt werden. Darüber hinaus kann der Magazineinsatz in axialer Richtung beiderseitig entleert werden. Der Magazineinsatz kann dadurch unabhängig von seiner Orientierung (schwerkraftvermittelt) entladen werden.

Der Schieber kann erfindungsgemäß rohrförmig oder stabförmig ausgeführt sein. Im erstgenannten Fall kann der Magazineinsatz mit einem besonders geringeren Materialeinsatz und einer kleineren Masse realisiert werden.

Nach der Erfindung kann die Fixiereinheit eine Lagerhülse mit jeweils einem Fixierelement für jede Aufnahmekammer umfassen, das von der Lagerhülse in radialer Richtung wegragt. Die Fixierelemente können an der Lagerhülse beispielsweise festgenietet oder festgeschraubt sein. Dadurch können einzelne Fixierelemente im Bedarfsfall ausgetauscht werden. Alternativ können die Fixierelemente mit der Lagerhülse auch verklebt oder verschweißt sein. Besonders bevorzugt sind die Fixierelemente und die Lagerhülse einstückig in Form eines Spritzgussteils, insbesondere aus Kunststoff, ausgeführt. Dies bietet insbesondere bei der Massenfertigung des Magazineinsatzes Kostenvorteile.

Jedes einzelne Fixierelement ist nach der Erfindung vorzugsweise federelastisch verformbar oder an der Lagerhülse federelastisch angelenkt. Dadurch können Probenröhrchen mit unterschiedlichem Durchmesser in den Aufnahmekammern zuverlässig festgesetzt werden. Dies ist für die Einsatzbreite des Magazineinsatzes von Vorteil.

Nach einer bevorzugten Ausführungsform der Erfindung ist die Lagerhülse der Fixiereinheit mit der Steuerkurve versehen. Dadurch kann ein besonders großer Schwenkwinkel der Fixiereinheit auf kostengünstige Weise realisiert werden.

Die Steuerkurve kann insbesondere als eine Nut oder als ein Langloch ausgeführt sein. Diese können kostengünstig und mit einem nur geringen technischen Aufwand realisiert werden. Ist die Nut oder das Langloch V-förmig ausgeführt, so kann dadurch unabhängig von der axialen Bewegungsrichtung des Schiebers eine unidirektionale Schwenkbewegung der Fixiereinheit realisiert werden. Dadurch kann der Magazineinsatz mit einem wenig komplexen konstruktiven Aufbau realisiert werden.

Ein vereinfachtes und sicheres Bestücken des Magazineinsatzes mit einem oder mit mehreren Probenröhrchen kann nach der Erfindung dadurch erreicht werden, dass die Fixiereinheit zumindest ein Verschlussmittel aufweist, mittels dessen die Aufnahmekammern einenends zumindest teilweise verschließbar sind. Dadurch kann ein zu tiefes Einführen der Probenröhrchen in die Aufnahmekammern vermieden und zugleich ein zuverlässiges Festklemmen der Probenröhrchen im Magazineinsatz gewährleistet werden. Bevorzugt sind die Aufnahmekammern mittels des Verschlussmittels synchronisiert verschließbar.

Das Verschlussmittel ist unter fertigungstechnischen Aspekten bevorzugt als ein Lochflansch ausgebildet, der sich von der Lagerhülse in einer radialen Richtung wegerstreckt. Der Lochflansch und die vorstehend genannte Lagerhülse der Fixiereinheit können unter fertigungstechnischen Aspekten insbesondere einstückig ausgebildet sein. So kann die Lagerhülse und der Lochflansch insbesondere als ein Spritzgussteil, bevorzugt aus Kunststoff, ausgeführt sein.

Nach einer bevorzugten Weiterbildung der Erfindung weist die Magazintrommel eine erste und eine zweite Endscheibe auf, die über ein Verbindungselement, bevorzugt in Form eines Stützrohrs, miteinander verbunden sind. Die Aufnahmekammern sind dabei umfangsseitig bevorzugt jeweils durch die beiden Endscheiben sowie durch jeweils ein zwischen den beiden Endscheiben gehalten angeordnetes rohrförmiges Wandelement begrenzt. Dadurch kann die Magazintrommel mit einem besonders geringen Materialeinsatz kostengünstig gefertigt werden. Das Mittelrohr kann gitterförmig ausgeführt sein, um den Materialeinsatz nochmals weiter zu verringern.

Der Lochflansch kann in axialer Richtung an einer der beiden Endscheiben der Magazintrommel, insbesondere zwischen zwei Endscheibenabschnitten einer der beiden Endscheiben, geführt sein. Dadurch kann ein besonders störungsarmer Betriebseinsatz des Magazineinsatzes realisiert werden.

Nach der Erfindung kann jedes der vorgenannten Wandelemente für den für den Menschen sichtbaren Spektralbereich des Lichts transparent sein. Dadurch kann eine ordnungsgemäße Positionierung der Probenröhrchen vereinfacht visuell oder auch durch eine geeignete technische Sensorik überprüft werden. Auch lassen sich dadurch unerwünschte Leckagen der im Magazin zu befördernden Probenröhrchen vereinfacht erkennen bzw. detektieren und entsprechende Schutzmaßnahmen bei der weiteren Handhabung einer mit dem Magazineinsatz versehenen Rohrpostbüchse ergreifen.

Der Schieber oder das Mittelrohr können zumindest ein Lagerteil, bevorzugt in Form eines Ringbunds aufweisen, über den der Schieber an dem Stützrohr im Gleitspiel-Formschluss geführt ist. Dadurch können größere Kaliberunterschiede des Stützrohrs und des Schiebers kompensiert und der Schieber mit einem besonders geringen Materialeinsatz realisiert werden. Auch kann dadurch einem unerwünschten Verklemmen des Schiebers entgegengewirkt werden.

Steht der Schieber einenends aus der Magazintrommel heraus, so kann der Magazineinsatz in seinem Betriebseinsatz in einer Rohrpostbüchse unabhängig von der Orientierung des Magazineinsatzes in Lotrichtung auf einfache Weise mit einem Betätigungsstempel einer Rohrpoststation betätigt werden.

Nach der Erfindung kann die Magazintrommel oder der gesamte Magazineinsatz aus einem Kunststoffmaterial bestehen. Dadurch kann der Magazineinsatz kostengünstig und mit einer relativ geringen Masse bereitgestellt werden.

Die erfindungsgemäße Rohrpostbüchse weist einen rohrförmigen Grundkörper auf, der beidenends mit einer mit einem Deckel verschließbaren Öffnung versehen ist. Im Grundkörper ist ein vorstehend erläuterter Magazineinsatz angeordnet, wobei die Magazintrommel im rohrförmigen Grundkörper drehfest gehalten angeordnet ist. Die Magazineinheit ist vorteilhaft lösbar in dem rohrförmigen Grundkörper gehalten angeordnet. So kann die etwa die Magazintrommel mit dem Grundkörper verschraubt oder auch im Presssitz im Grundkörper gehalten sein. Dadurch wird eine Reinigung und ggf. erforderliche Wartung bzw. Reparatur der Rohrpostbüchse vereinfacht. es versteht sich, dass der Magazineinsatz auch mit dem Grundkörper der Rohrpostbüchse verklebt oder verschweißt sein kann.

Die Erfindung ist nachfolgend anhand eines in der Zeichnung wiedergegebenen Ausführungsbeispiels näher erläutert. Das gezeigte Ausführungsbeispiel hat für die Schilderung der Erfindung alleinig beispielhaften Charakter.

In der Zeichnung zeigen:
- Fig. 1: eine Rohrpostbüchse mit einem Magazineinsatz für Probenröhrchen, in einer Schnittdarstellung;
- Fig. 2: den Magazineinsatz gemäß Fig. 1 in einer freigestellten perspektivischen Ansicht;
- Fig. 3: den Magazineinsatz gemäß Fig. 1 in einer Seitenansicht;
- Fig. 4: den Magazineinsatz gemäß Fig. 1 in einer freigestellten Schnittdarstellung;
- Fig. 5: den Magazineinsatz gemäß Fig. 1 bei in Fixierstellung angeordneter Fixiereinheit, in einer stirnseitigen Ansicht; und
- Fig. 6: den Magazineinsatz gemäß Fig. 1 mit in Freigabestellung geschwenkter Fixiereinheit, in einer stirnseitigen Ansicht;

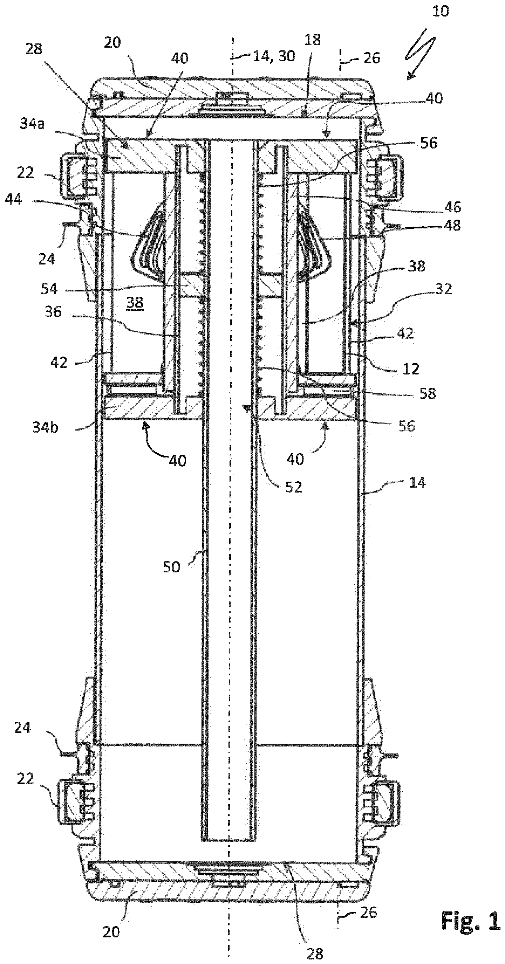

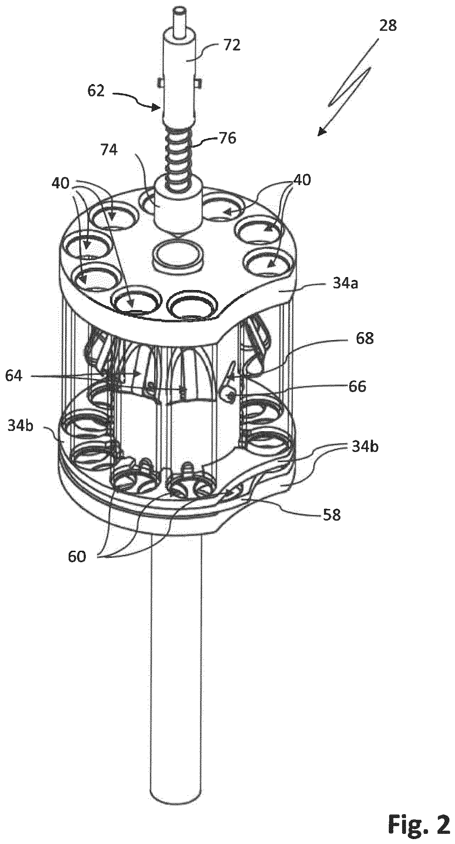

**Fign. 1** und **2** zeigen eine Rohrpostbüchse **10,** die für den Transport von Probenröhrchen **12** innerhalb eines Rohrleitungssystems einer an sich bekannten Rohrpostanlage vorgesehen ist. In den Probenröhrchen 12 können beispielsweise Körperflüssigkeiten wie Blut, Liquor cerebrospinalis, Urin, Pleuraflüssigkeit und dergleichen, bevorratet sein. In der Regel bestehen die Probenröhrchen 12 aus einem Kunststoffmaterial und sind für den Einmalgebrauch vorgesehen.

Die Rohrpostbüchse 10 weist einen hülsen- bzw. rohrförmigen Grundkörper **14** auf, der sich entlang der Längsachse **16** der Rohrpostbüchse erstreckt. Der Grundkörper 14 ist beidenends mit einer Öffnung **18** versehen. Die beiden Öffnungen 18 dienen dem Be- und Entladen der Rohrpostbüchse 10 und sind jeweils mit einem Deckel **20** verschließbar.

An der Rohrpostbüchse 10 sind außenseitig in an sich bekannter Weise zwei Laufstreifen **22** angeordnet, die beispielsweise aus einem Textil oder einem Flauschband bestehen können. Bedarfsweise können zusätzliche Dichtringe **24** vorgesehen sein, um eine verbesserte dichtende Anlage der Rohrpostbüchse 10 an der Wandung der Rohrleitungssystems zu ermöglichen. Die Deckel 20 sind hier jeweils um eine mit **26** bezeichnete Schwenkachse am Grundkörper 14 der Rohrpostbüchse 10 verschwenkbar angelenkt. Die Schwenkachsen 26 sind zur Längsachse 16 des Grundkörpers 14 parallel oder im Wesentlichen parallel verlaufend ausgerichtet. Nach einem in der Zeichnung nicht näher wiedergegebenen Ausführungsbeispiel können die Deckel 20 auch als Klappdeckel ausgeführt sein.

Innerhalb des rohrförmigen Grundkörpers 14 ist ein insgesamt mit **28** bezeichneter Magazineinsatz zur Aufnahme der Probenröhrchen 12 angeordnet. Der Magazineinsatz 28 ist im Grundkörper 14 der Rohrpostbüchse in nicht näher dargestellter Weise lösbar gehalten angeordnet. Der Magazineinsatz 28 weist die Längsachse **30** auf, die hier mit der Längsachse 16 der Rohrpostbüchse 10 zusammenfällt.

Der Magazineinsatz 28 umfasst eine Magazintrommel **32** mit einer oberen und einer unteren Endscheibe **34a, 34b,** die in axialer Richtung voneinander beabstandet angeordnet sind. Die beiden Endscheiben 34a, 34b sind jeweils an einem Mittelrohr **36** befestigt. Die Magazintrommel 32 ist im Grundkörper 14 der Rohrpostbüchse 10 drehfest gehalten angeordnet.

Zur Aufnahme der Probenröhrchen 12 dienen mehrere rohrförmige Aufnahmekammern **38.** Die Aufnahmekammern 38 erstrecken sich jeweils von ihrer stirnseitig an der Magazintrommel 32 angeordneten ersten Öffnung in axialer Richtung bis zu ihrer stirnseitig an der Magazintrommel 32 angeordneten zweiten stirnseitigen Öffnung **40** durch die Magazintrommel 32 hindurch.

Die Aufnahmekammern 38 sind voneinander jeweils beabstandet ringförmig um die Längsachse 30 des Magazineinsatzes 28 herum angeordnet. Gemäß Fig. 1 sind die Aufnahmekammern 38 in Umfangsrichtung jeweils durch ein hülsenförmiges Wandelement **42** sowie die beiden Endscheiben 34a, 34b des Magazineinsatzes 28 begrenzt. Die hülsenförmigen Wandelemente 42 bestehen vorzugsweise aus einem Kunststoffmaterial. Das Kunststoffmaterial ist vorteilhaft für den für den Menschen sichtbaren Spektralbereich des Lichts transparent. Dadurch kann eine ordnungsgemäße Positionierung der in der Rohrpostbüchse 10 zu transportierenden Probenröhrchen 12 sowie auch unerwünschte Leckagen bzw. Verschmutzungen der Aufnahmekammern 36 auf einfache Weise von einer Bedienperson bzw. mittels einer geeigneten Sensorik erkannt werden.

Zum Fixieren von in den Aufnahmekammern 36 eingeschobenen Probenröhrchen 12 dient eine Fixiereinheit **44.** Die Fixiereinheit 44 umfasst eine Lagerhülse **46** mit jeweils einem Fixierelement **48** für jede Aufnahmekammer 38, das von der Lagerhülse 46 in radialer Richtung nach außen wegragt. Die Lagerhülse 46 ist gemeinsam mit den daran angeordneten Fixierelementen 48 um die Längsachse 30 des Magazineinsatzes 28 zwischen einer Fixierstellung und einer Freigabestellung schwenkbar. Die Fixierelemente 46 können gemäß Fig. 1 bügelförmig ausgeführt sein und sind vorzugsweise in sich federelastisch verformbar oder an der Lagerhülse in Umfangsrichtung federelastisch angelenkt.

Zum Verstellen der Fixiereinheit 44 dient ein Schubglied oder Schieber **50.** Der Schieber 50 ist in einer Zentralausnehmung **52** der Magazintrommel 32 in einer axialen Richtung längsverschieblich angeordnet. Der Schieber 50 ist hier zwecks einer möglichst geringen Masse der Rohrpostbüchse 10 rohrförmig ausgeführt und erstreckt sich einenends über die untere Endscheibe 34b der Magazintrommel 32 hinaus. Der Schieber 50 ist hier über ein Lagerelement **54** an der Lagerhülse in einer radialen Richtung abgestützt. Die Lagerelement 54 ist hier rein beispielhaft in Form eines am Schieber 50 befestigten Ringbunds ausgeführt. An der Lagerscheibe 54 stützt sich beiderseitig ein in axialer Richtung vorgespanntes Federelement **56** ab. Die beiden Federelemente 56 sind derart aufeinander abgestimmt, dass der Schieber 50 in axialer Richtung in seiner gezeigten Neutralstellung oder ersten Funktionsstellung gehalten ist. Der Schieber 50 kann somit gegen die Kraft jeweils eines der Federelemente 56 aus seiner gezeigten ersten Funktionsstellung in axialer Richtung ausgelenkt werden.

Die Fixiereinheit 44 umfasst gemäß der perspektivischen Ansicht des Magazineinsatzes 28 weiter ein Verschlussmittel **58,** mittels dessen die Aufnahmekammern 38 einenends zumindest teilweise (synchronisiert) in axialer Richtung verschließbar bzw. verlegbar sind. Das Verschlussmittel 58 ist hier in Form eines Lochflansches ausgebildet, der sich von der Lagerhülse 46 in einer radialen Richtung wegerstreckt. Der Lochflansch weist Ausnehmungen **60** auf, die in Freigabestellung der Fixiereinheit 44 zu den Öffnungen 40 der unteren Endscheibe 34b in einer axialen Richtung fluchtend angeordnet sind und eine Passage eines in der betreffenden Aufnahmekammer 38 der Magazintrommel 32 angeordneten Probenröhrchens 12 erlauben. Das Verschlussmittel 58 kann an der Lagerhülse 46 insbesondere festgeklebt, mit dieser verschweißt oder gemeinsam mit der Lagerhülse 46 als ein einstückiges Spritzgussteil ausgebildet sein.

In **Fig. 2** ist der Magazineinsatz 28 in einer freigestellten perspektivischen Ansicht gemeinsam mit einem Betätigungsstempel **62** einer nicht näher dargestellten Rohrpoststation zum automatischen Entladen der Rohrpostbüchse 12 (Fig. 1) gezeigt. Die durch die obere und untere Endscheibe 34a, 34b jeweilig definierten Öffnungen 40 der Aufnahmekammern 38 sind gut zu erkennen. Das rohrförmige Wandelement 42 einer jeden Aufnahmekammer 38 ist jeweils mit einer Durchgriffsausnehmung **64** für das der Aufnahmekammer 38 jeweilig zugeordnete Fixierelement 48 der Fixiereinheit 44 (Fig.l) versehen. Die Durchgriffsausnehmung 64 ist derart ausgeführt, dass das Fixierelement 48 relativ zur Aufnahmekammer 38 um die Längsachse 30 des Magazineinsatzes 28 schwenkbar ist.

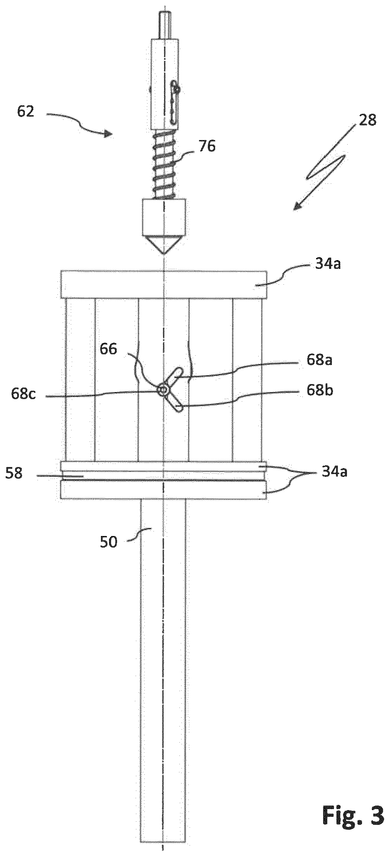

Der Schieber 50 und die Lagerhülse 46 der Fixiereinheit 44 sind über zumindest ein Mitnahmeelement (=Mitnehmer) **66** miteinander bewegungsgekoppelt. Das Mitnahmeelement 66 ist am Schieber 50 befestigt und erstreckt sich vom Schieber 50 in einer radialen Richtung nach außen. Gemäß Fig. 2 greift das Mitnahmeelement 66 in eine Steuerkurve **68** der Lagerhülse 46 ein. Das Mitnahmeelement 66 ist hier beispielhaft als Schraube ausgeführt, die in den Schieber 50 eingeschraubt ist. Die Steuerkurve 68 ist gemäß der in **Fig. 3** gezeigten Seitenansicht des Magazineinsatzes 28 als ein V-förmiges Langloch ausgeführt. Die beiden Schenkel **68a, 68b** des Langlochs 68 erstrecken sich von ihrem gemeinsamen Basisabschnitt **68c** gegensinnig in axialer Richtung weg. Ist das Mitnahmeelement 66 im Bereich der Basis 68c der Steuerkurve angeordnet, so befindet sich die Fixiereinheit 44 in ihrer die Probenröhrchen 12 in der jeweiligen Aufnahmekammer 38 fixierenden Fixierstellung. Ist das Mitnahmeelement 66 im Bereich eines freien Endes des jeweiligen Schenkels 68a, 68b der Steuerkurve 68 angeordnet, so ist die Fixiereinheit 44 in ihre Freigabestellung geschwenkt. Die Fixiereinheit 44 ist mithin durch ein axial gerichtetes Überführen des Schiebers 50 aus seiner ersten Funktionsstellung in seine zweite Funktionsstellung (= Vorhubendlage) aus der Fixierposition in ihre Freigabestellung verschwenkbar.

Der Lochflansch ist gemäß Fig. 2 in axialer Richtung zwischen zwei Endscheibenabschnitten **70a, 70b** der unteren Endscheibe 34b der Magazintrommel 32 geführt. Die untere Endscheibe 34b dient der Fixiereinheit 44 dadurch als Widerlager, sodass die Fixiereinheit 44 relativ zur Magazintrommel 32 axial unverschieblich oder im Wesentlichen axial unverschieblich gehalten angeordnet ist.

Der Betätigungsstempel 62 ist in axialer Richtung bewegbar, um die Fixiereinheit 44 des Magazineinsatzes 28 zu entriegeln, d. h. in ihre Freigabestellung zu überführen. Der Betätigungsstempel 62 kann einen Fußabschnitt **72** und einen Kopfabschnitt **74** aufweisen, der dem Kontaktiren und axialen Verstellen des Schiebers 50 des Magazineinsatzes 28 dient. Der Kopfabschnitt 74 kann relativ zum Fußabschnitt 72 gegen die Kraft einer Feder **76** axial verschiebbar angeordnet sein. Dadurch können Lagevarianzen der Rohrpostbüchse 10 innerhalb der jeweiligen Rohrpoststation bzw. Lagevarianzen des Schiebers 50 in axialer Richtung relativ zum Grundkörper 14 der Rohrpostbüchse 10 (Fig. 1) zuverlässig kompensiert werden.

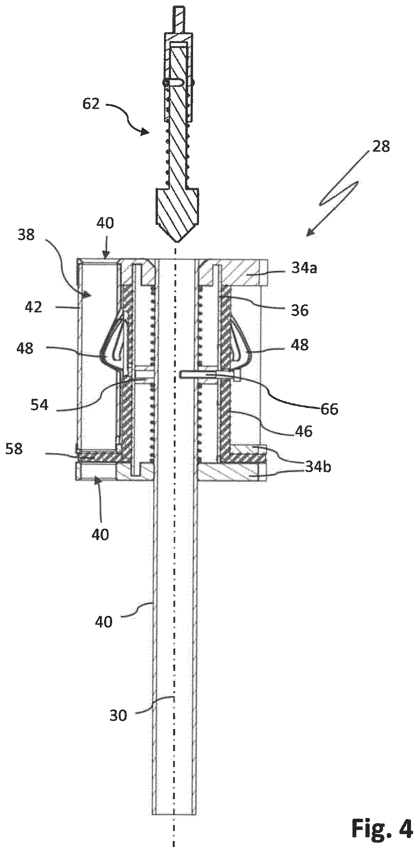

Das Mitnahmeelement 66 kann das Lagerelement 54 gemäß der in **Fig. 4** gezeigten Schnittdarstellung des Magazineinsatzes 28 durchgreifen, um so eine besonders laststabile Verankerung des Mitnahmeelements 66 am Schieber 50 zu erreichen. Es versteht sich, dass das Mitnahmeelement 66 auch das Mittelrohr 36 der Magazintrommel 32 in radialer Richtung durchgreift. Das Mittelrohr 36 weist dazu eine in den Zeichnungen nicht näher gezeigte Aussparung auf.

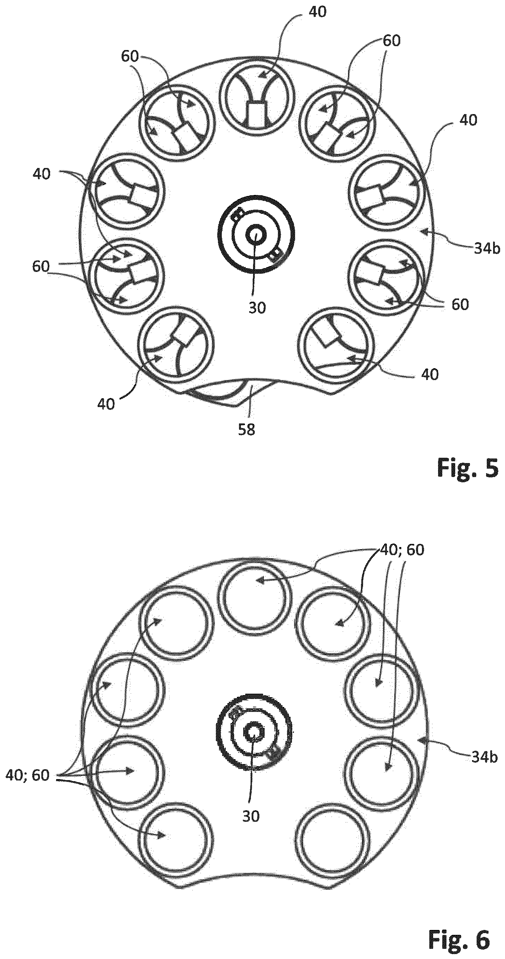

In den **Figuren 5** und **6** ist die untere Endscheibe 34b des Magazineinsatzes 28 jeweils in einer stirnseitigen Ansicht gezeigt. Die Ausnehmungen 60 des Lochflansches weisen ein mit dem Verteilungsmuster der Öffnungen 40 der unteren Endscheibe 34b übereinstimmendes räumliches Verteilungsmuster auf. Die Fixiereinheit 44 ist gemäß Fig. 5 in ihrer Fixierposition angeordnet, in der die Öffnungen des Lochflansches relativ zu den Öffnungen 40 der unteren Endscheibe 34b in Schwenkrichtung versetzt angeordnet sind. Der Lochflansch überdeckt deshalb jede einzelne Öffnung 40 der unteren Endscheibe 34b abschnittsweise in einer axialen Richtung. Ein in der jeweiligen Aufnahmekammer anzuordnendes bzw. angeordnetes Probenröhrchen 12 kann dadurch nicht versehentlich über die untere Endscheibe 34b hindurch aus der jeweiligen Aufnahmekammer 38 rutschen bzw. geschoben werden.

In Fig. 6 ist die Fixiereinheit 44 aus der in Fig. 5 gezeigten Fixierstellung in ihre Freigabestellung verschwenkt dargestellt. Die Ausnehmungen 60 des Lochflansches fluchten in axialer Richtung vollständig mit den Öffnungen 40 der unteren Endscheibe 34b der Magazintrommel 32, so dass in den Aufnahmekammern 38 angeordneten Probenröhrchen - der Schwerkraft folgend - aus dem Magazineinsatz 28 und somit der Rohrpostbüchse 10 in axialer Richtung herausgleiten können.

Zur Bestückung des Magazineinsatzes 28 mit Probenröhrchen werden diese bei geöffnetem oberen Deckel 20 der Rohrpostbüchse 10 über die Öffnungen 40 der oberen Endscheibe 34a in die jeweilige Aufnahmekammer 38 des Magazineinsatzes 28 eingeschoben. Die Fixierelemente 48 können dabei durch das Probenröhrchen 12 in Umfangsrichtung der Lagerhülse 46 elastisch ausgelenkt werden, um so das Einschieben des jeweiligen Probenröhrchens 12 zu ermöglichen. Die Probenröhrchen 12 können in axialer Richtung bis auf Anschlag gegen das Verschlussmittel 58 geschoben werden. Für den Transport der Probenröhrchen 12 sind diese durch die Fixierelemente 48 in ihrer jeweiligen Aufnahmekammer 38 geklemmt gehalten angeordnet. Bei Erreichen des Bestimmungsorts innerhalb der Rohrpostanlage kann die Fixiereinheit 44 in einer Rohrpoststation mittels eines von beliebiger Seite in die Rohrpostbüchse axial eingeführten Druckstempels 62 entriegelt, d. h. in ihre Freigabestellung überführt und so die Probenröhrchen der Schwerkraft folgend der Rohrpostbüchse 12 herausgeführt werden. Durch ein Zurückziehen des Druckstempels 62 wird die Fixiereinrichtung federkraftbeaufschlagt erneut in ihre Fixierstellung rücküberführt. Die Rohrpostbüchse 10 steht damit für eine erneute Bestückung mit zu versendenden Probenröhrchen 12 bereit.

## Patentansprüche

1. Magazineinsatz (28) für eine Rohrpostbüchse (10), zur Aufnahme von mit Körperflüssigkeiten befüllten Probenröhrchen (12), umfassend:
- eine Magazintrommel (32) mit mehreren Aufnahmekammern (38) für die Probenröhrchen (12), die ringförmig um die Längsachse (30) des Magazineinsatzes (32) herum angeordnet sind und welche sich jeweils in einer zur Längsachse (30) axialen Richtung durch die Magazintrommel (32) hindurcherstrecken;
- eine Fixiereinheit (44), die um die Längsachse (30) von einer Fixierposition in eine Freigabestellung schwenkbar ist, wobei ein in der jeweiligen Aufnahmekammer (38) angeordnetes Probenröhrchen (12) mittels der in Fixierposition angeordneten Fixiereinheit (44) in der Aufnahmekammer (38) relativ zur Magazintrommel (32) lagefixiert gehalten ist;
**dadurch gekennzeichnet, dass** der Magazineinsatz umfasst:
- ein Schieber (50), der in einer Zentralausnehmung (52) der Magazintrommel (32) angeordnet ist und welcher aus einer ersten Funktionsstellung bidirektional in axialer Richtung in eine jeweilige zweite Funktionsstellung relativ zur Magazintrommel verschiebbar ist; und
- ein Mitnahmeelement (66), das am Schieber (50) befestigt ist und welches sich in radialer Richtung in eine Steuerkurve der Fixiereinheit (44) hineinerstreckt, sodass durch ein Überführen des Schiebers (50) in seine jeweilige zweite Funktionsstellung ein Schwenken der Fixiereinheit (44) aus der Fixierposition in ihre Freigabestellung bewirkbar ist.

2. Magazineinsatz nach Anspruch 1, **dadurch gekennzeichnet, dass** der Schieber (50) rohr- oder stabförmig ausgeführt ist.

3. Magazineinsatz nach Anspruch 1 oder 2, **dadurch gekennzeichnet, dass** die Fixiereinheit (44) eine Lagerhülse (46) mit jeweils einem Fixierelement (48) für jede Aufnahmekammer (38) umfasst, das von der Lagerhülse (46) in radialer Richtung wegragt.

4. Magazineinsatz nach Anspruch 3, **dadurch gekennzeichnet, dass** die Lagerhülse (46) mit der Steuerkurve (68) versehen ist.

5. Magazineinsatz nach Anspruch 4, **dadurch gekennzeichnet, dass** die Steuerkurve (68) als ein, bevorzugt V-förmiges, Langloch ausgeführt ist.

6. Magazineinsatz nach einem der vorhergehenden Ansprüche, **dadurch gekennzeichnet, dass** die Fixiereinheit (44) zumindest ein Verschlussmittel (58) aufweist, mittels dessen die Aufnahmekammern (38) einenends zumindest teilweise, insbesondere synchronisiert, verschließbar sind.

7. Magazineinsatz nach Anspruch 6, **dadurch gekennzeichnet, dass** das Verschlussmittel (58) in Form eines Lochflansches ausgebildet ist, der sich von der Lagerhülse (46) in einer radialen Richtung wegerstreckt.

8. Magazineinsatz nach einem der vorhergehenden Ansprüche, **dadurch gekennzeichnet, dass** das der Magazineinsatz (28) eine erste und eine zweite Endscheibe (34a, 34b) aufweist, die über ein Mittelrohr (36) miteinander verbunden sind, wobei die Aufnahmekammern (38) umfangsseitig jeweils durch die beiden Endscheiben (34a, 34b) sowie durch jeweils ein zwischen den beiden Endscheiben (34a, 34b) gehalten angeordnetes rohrförmiges Wandelement (42) begrenzt sind.

9. Magazineinsatz nach Anspruch 8, **dadurch gekennzeichnet, dass** der Schieber (50) am Mittelrohr (36) abschnittsweise, bevorzugt über einen Ringbund (54), im Gleitspiel-Formschluss geführt ist.

10. Magazineinsatz nach Anspruch 7 und 8, **dadurch gekennzeichnet, dass** der Lochflansch in axialer Richtung an einer der beiden Endscheiben (34a, 34b) der Magazintrommel (32), insbesondere zwischen zwei Endscheibenabschnitten (70a, 70b) einer der beiden Endscheiben (34a, 34b), geführt ist.

11. Magazineinsatz nach Anspruch 8, **dadurch gekennzeichnet**, das die Wandelemente (42) jeweils für den für den Menschen sichtbaren Spektralbereich des Lichts transparent sind.

12. Magazineinsatz nach einem der vorhergehenden Ansprüche, **dadurch gekennzeichnet, dass** der Schieber (50) einenends aus der Magazintrommel (32) heraussteht.

13. **Rohrpostbüchse** (10) mit einem rohrförmigen Grundkörper (14), der beidenends eine mit einem Deckel (20) verschließbare Öffnung (18) aufweist, und mit einem im Grundkörper (14) angeordneten Magazineinsatz (28) nach einem der vorhergehenden Ansprüche, wobei die Magazintrommel (32) des Magazineinsatzes (28) im rohrförmigen Grundkörper (14) drehfest gehalten angeordnet ist.

## Claims

1. Magazine insert (28) for a pneumatic tube carrier (10), for receiving sample tubes (12) filled with body fluids, comprising:
- a magazine drum (32) having a plurality of receiving chambers (38) for the sample tubes (12), which receiving chambers are arranged annularly about the longitudinal axis (30) of the magazine insert (32) and which each extend through the magazine drum (32) in an axial direction in relation to the longitudinal axis (30);
- a fixing unit (44) which can be pivoted about the longitudinal axis (30) from a fixing position into a release position, a sample tube (12) which is arranged in the relevant receiving chamber (38) being held in the receiving chamber (38), fixed in position relative to the magazine drum (32), by means of the fixing unit (44) which is arranged in the fixing position;
**characterized in that** the magazine insert comprises:
- a slide (50) which is arranged in a central recess (52) of the magazine drum (32) and which can be displaced bidirectionally in an axial direction from a first functional position into a relevant second functional position, relative to the magazine drum; and
- a driving element (66) which is fastened to the slide (50) and which extends in a radial direction into a control curve of the fixing unit (44), such that the fixing unit (44) can be pivoted from the fixing position into the release position thereof by transferring the slide (50) into the relevant second functional position thereof.

2. Magazine insert according to claim 1, **characterized in that** the slide (50) is tubular or rod-shaped.

3. Magazine insert according to either claim 1 or claim 2, **characterized in that** the fixing unit (44) comprises a bearing sleeve (46) having in each case one fixing element (48) for each receiving chamber (38), which fixing element projects away from the bearing sleeve (46) in a radial direction.

4. Magazine insert according to claim 3, **characterized in that** the bearing sleeve (46) is provided with the control curve (68).

5. Magazine insert according to claim 4, **characterized in that** the control curve (68) is designed as a slot, preferably a V-shaped slot.

6. Magazine insert according to any of the preceding claims, **characterized in that** the fixing unit (44) has at least one closure means (58), by means of which the receiving chambers (38) can be at least partially closed at one end, in particular in a synchronized manner.

7. Magazine insert according to claim 6, **characterized in that** the closure means (58) is designed as a perforated flange which extends away from the bearing sleeve (46) in a radial direction.

8. Magazine insert according to any of the preceding claims, **characterized in that** the magazine insert (28) has a first and a second end plate (34a, 34b) which are interconnected by means of a central tube (36), the receiving chambers (38) each being circumferentially delimited by the two end plates (34a, 34b) and by a tubular wall element (42) arranged so as to be held between the two end plates (34a, 34b).

9. Magazine insert according to claim 8, **characterized in that** the slide (50) is guided on the central tube (36) in portions, preferably by means of an annular collar (54), in an interlocking connection having sliding clearance.

10. Magazine insert according to claim 7 and claim 8, **characterized in that** the perforated flange is guided in the axial direction on one of the two end plates (34a, 34b) of the magazine drum (32), in particular between two end plate portions (70a, 70b) of one of the two end plates (34a, 34b).

11. Magazine insert according to claim 8, **characterized in that** the wall elements (42) are each transparent for the spectral range of light visible to humans.

12. Magazine insert according to any of the preceding claims, **characterized in that** the slide (50) protrudes from the magazine drum (32) at one end.

13. Pneumatic tube carrier (10) having a tubular main body (14) which has, at both ends, an opening (18) which can be closed using a lid (20), and having a magazine insert (28) according to any of the preceding claims which is arranged in the main body (14), wherein the magazine drum (32) of the magazine insert (28) is arranged so as to be rotationally fixed in the tubular main body (14).

## Revendications

1. Magasin insérable (28) destiné à une boîte d'envoi pneumatique (10) et conçu pour recevoir des tubes à essai (12) emplis de fluides corporels, comprenant :
- un tambour d'emmagasinage (32) muni de plusieurs chambres de réception (38) qui sont dédiées auxdits tubes à essai (12), sont disposées annulairement tout autour de l'axe longitudinal (30) dudit magasin insérable (28) et traversent à chaque fois ledit tambour d'emmagasinage (32), de part en part, dans une direction axiale par rapport audit axe longitudinal (30) ;
- une unité (44) de blocage à demeure qui est apte à pivoter, autour de l'axe longitudinal (30), d'un emplacement de blocage à demeure à une position de libération, sachant qu'un tube à essai (12), disposé dans la chambre de réception (38) considérée, est maintenu bloqué à demeure dans ladite chambre de réception (38), par rapport au tambour d'emmagasinage (32), au moyen de ladite unité (44) de blocage à demeure occupant ledit emplacement de blocage à demeure ;
**caractérisé par le fait que** ledit magasin insérable inclut :
- une pièce coulissante (50) logée dans un évidement central (52) du tambour d'emmagasinage (32) et apte à accomplir un coulissement bidirectionnel par rapport audit tambour d'emmagasinage, dans la direction axiale, d'une première position fonctionnelle à une seconde position fonctionnelle respective ; et
- un élément d'entraînement (66) fixé à la pièce coulissante (50) et pénétrant, dans la direction radiale, dans une came de commande de l'unité (44) de blocage à demeure, de façon telle qu'un transfert de ladite pièce coulissante (50) à sa seconde position fonctionnelle respective puisse provoquer un pivotement de ladite unité (44) de blocage à demeure vers sa position de libération à partir de l'emplacement de bocage à demeure.

2. Magasin insérable selon la revendication 1, **caractérisé par le fait que** la pièce coulissante (50) est réalisée en forme de tube ou de tige.

3. Magasin insérable selon la revendication 1 ou 2, **caractérisé par le fait que** l'unité (44) de blocage à demeure inclut une douille de montage (46) dotée d'un élément (48) de blocage à demeure qui est respectivement affecté à chaque chambre de réception (38) et fait saillie, dans la direction radiale, au-delà de ladite douille de montage (46).

4. Magasin insérable selon la revendication 3, **caractérisé par le fait que** la douille de montage (46) est pourvue de la came de commande (68).

5. Magasin insérable selon la revendication 4, **caractérisé par le fait que** la came de commande (68) est réalisée sous la forme d'un trou oblong préférentiellement configuré en V.

6. Magasin insérable selon l'une des revendications précédentes, **caractérisé par le fait que** l'unité (44) de blocage à demeure comporte au moins un moyen d'obturation (58) à l'aide duquel les chambres de réception (38) peuvent être obturées à une extrémité, au moins en partie, notamment de manière synchronisée.

7. Magasin insérable selon la revendication 6, **caractérisé par le fait que** le moyen d'obturation (58) est réalisé sous la forme d'une bride perforée qui s'étend, dans une direction radiale, à partir de la douille de montage (46).

8. Magasin insérable selon l'une des revendications précédentes, **caractérisé par le fait que** ledit magasin insérable (28) comporte des premier et second disques d'extrémité (34a, 34b) reliés l'un à l'autre par l'intermédiaire d'une tubulure centrale (36), les chambres de réception (38) étant respectivement délimitées, du côté périphérique, par les deux disques d'extrémité (34a, 34b), ainsi que par un élément tubulaire de paroi (42) respectif qui est maintenu interposé entre lesdits deux disques d'extrémité (34a, 34b).

9. Magasin insérable selon la revendication 8, **caractérisé par le fait que** la pièce coulissante (50) est guidée par zones sur la tubulure centrale (36), avec assemblage par conformation à jeu de glissement, de préférence par l'intermédiaire d'une collerette annulaire (54).

10. Magasin insérable selon les revendications 7 et 8, **caractérisé par le fait que** la bride perforée est guidée dans la direction axiale sur l'un des deux disques d'extrémité (34a, 34b) du tambour d'emmagasinage (32), en particulier entre deux régions (70a, 70b) de l'un des deux disques d'extrémité (34a, 34b).

11. Magasin insérable selon la revendication 8, **caractérisé par le fait que** les éléments de paroi (42) sont transparents, à chaque fois, vis-à-vis de la gamme spectrale de lumière visible par l'être humain.

12. Magasin insérable selon l'une des revendications précédentes, **caractérisé par le fait que** la pièce coulissante (50) fait saillie, par une extrémité, au-delà du tambour d'emmagasinage (32).

13. Boîte d'envoi pneumatique (10) comprenant un corps tubulaire de base (14) muni, aux deux extrémités, d'un orifice (18) obturable par un couvercle (20), et un magasin insérable (28) conforme à l'une des revendications précédentes, logé dans ledit corps de base (14), le tambour d'emmagasinage (32) dudit magasin insérable (28) étant maintenu agencé avec verrouillage rotatif dans ledit corps tubulaire de base (14).
